# EUROPEAN PATENT SPECIFICATION

(11) **EP 4 322 058 B1**
(45) Date of publication and mention of the grant of the patent: **06.08.2025**
(21) Application number: 22189723.4
(22) Date of filing: 10.08.2022
(51) Int. Cl.: G06N 3/045, G06N 3/047, G06N 3/02, G06N 3/0475, G06N 3/098, G06N 3/063, G06N 3/094

(54) **OPTIMIZED DATA STORAGE IN MOBILE NETWORK SCENARIOS**
OPTIMIERTE DATENSPEICHERUNG IN MOBILEN NETZWERKSZENARIEN
STOCKAGE DE DONNÉES OPTIMISÉ DANS DES SCÉNARIOS DE RÉSEAU MOBILE

(43) Date of publication of application: 14.02.2024
(73) Proprietor: Nokia Solutions and Networks Oy, 02610 Espoo (FI)
(72) Inventor: Alberi-Morel, Marie Line, 91620 Nozay (FR); Conte, Alberto, 94240 L'Hay-les-Roses (FR); Giust, Fabio, 82049 Pullach (DE); Kaada, Soumeya, 91620 Nozay (FR)
(74) Representative: TBK

(56) References cited:
- EP-A1- 3 591 586
- SEVGICAN SALIH ET AL: "Intelligent network data analytics function in 5G cellular networks using machine learning", JOURNAL OF COMMUNICATIONS AND NETWORKS, NEW YORK, NY, USA,IEEE, US, vol. 22, no. 3, 17 July 2020 (2020-07-17), pages 269 - 280, XP011799300, ISSN: 1229-2370, [retrieved on 20200717], DOI: 10.1109/JCN.2020.000019
- UNKNOWN: "S2-2203779", vol. 3gpp, 16 May 2022 (2022-05-16), XP002808495, Retrieved from the Internet <URL:https://www.3gpp.org/ftp/tsg_sa/WG2_Arch/TSGS2_151E_Electronic_2022-05/Docs/S2-2203779.zip> [retrieved on 20220124]
- UNKNOWN: "S2-2202498", 14 February 2022 (2022-02-14), 3gpp, XP002808496, Retrieved from the Internet <URL:https://www.3gpp.org/ftp/tsg_sa/WG2_Arch/TSGS2_149E_Electronic_2022-02/INBOX/S2-2201861.zip> [retrieved on 20220123]
- UNKNOWN ETSI: "TS23.288", 10 July 2020 (2020-07-10), pages 2020 - 7, XP093016367, Retrieved from the Internet <URL:https://www.etsi.org/deliver/etsi_ts/123200_123299/123288/16.04.00_60/ts_123288v160400p.pdf> [retrieved on 20230123]

## Description

### Field

Various embodiments relate to optimized data storage in mobile network scenarios. More specifically, various embodiments relate to measures (including methods, apparatuses) for realizing optimized data storage in mobile network scenarios.

### Background

The present specification generally relates to mobile networks in which data (e.g. historical data) accumulate, are to be stored, and to be are to be retrieved.

With the increasing need in e.g. the 3^{rd} Generation Partnership Project (3GPP) 5^{th} Generation (5G) and beyond mobile networks e.g. to use artificial intelligence (AI) / machine learning (ML), a multiplicity of ML tasks will be executed, potentially leading to an explosion of amount of (historical) data to be stored. It will in general be important to save or limit resources for data storage while maintaining quality of the data stored.

With an analytics data repository function (ADRF) being the 5GC network function (NF) deputed to store historical data and analytics, it will be important for the ADRF to save or limit resources for historical data storage while maintaining quality of historical data stored.

This is limitation may be addressed by using techniques focusing on reducing the volume of data to be stored, by efficiently managing the data storage, by utilizing better existing storage hardware, or by utilizing storage equipment that consumes less energy.

Compression is a reduction in the number of bits needed to represent data. Reduction techniques can bring an acceptable trade-off between data quality, data quantity and resource saving or limiting for the ADRF. However, such approach may be accompanied with loss of data quality.

Hence, the problem arises that there are no approaches for handling an expected increase in data to be transmitted and stored without accompanying data loss or data quality loss.

Hence, there is a need to provide for optimized data storage in mobile network scenarios.

*Prior art which relates to this field can be found in document "*NTT DOCOMO, Rakuten Mobile: 'KI#4, New Sol: ML model exchange via ADRF', 3G PP TSG-WG SA2 Meeting #151E e-meeting, Elbonia, May 16 - 20, 2022, S2-2203779, XP002808495*", disclosing storing and exchanging a machine learning (ML) model via analytics data repository function (ADRF), and in particular a mechanism to store the ML model by a model training logical function (MTLF) by using an enhanced ADRF service, where a consumer uses the ADRF service to fetch the ML model.*

*Further prior art can be found in document* EP 3 591 586 A1*, disclosing data model generation using generative adversarial networks and a fully automated machine learning system which generates and optimizes solutions given a dataset and a desired outcome.*

*Further prior art can be found in document "*Nokia, Nokia Shanghai Bell, NTT DOCOMO, CATT, Ericsson, vivo: 'KI: Key Issue for WT#3.1', SA WG2 Meeting #149E, Elbonia, 14 - 25 February 2022, S2-2203779, XP002808496*".*

### Summary

Various embodiments aim at addressing at least part of the above issues and/or problems and *drawbacks.*

*Objects of the present disclosure are achieved by what is defined in the appended independent claims. Advantageous modifications thereof are set forth in the appended dependent claims.*

*Any one of aspects of the invention enables* an efficient and loss-less or at least loss-reduced storage, transmission, and re-use of data, to thereby solve at least part of the problems and drawbacks identified in relation to the prior art.

By way of example embodiments, there is provided optimized data storage in mobile network scenarios. More specifically, by way of example embodiments, there are provided measures and mechanisms for realizing optimized data storage in mobile network scenarios.

Thus, improvement is achieved by methods and apparatuses enabling/realizing optimized data storage in mobile network scenarios.

### Brief description of the drawings

In the following, the present disclosure will be described in greater detail by way of non-limiting examples with reference to the accompanying drawings, in which
Figure 1 is a block diagram illustrating an apparatus according to example embodiments,
Figure 2 is a block diagram illustrating an apparatus according to example embodiments,
Figure 3 is a block diagram illustrating an apparatus according to example embodiments,
Figure 4 is a block diagram illustrating an apparatus according to example embodiments,
Figure 5 is a block diagram illustrating an apparatus according to example embodiments,
Figure 6 is a block diagram illustrating an apparatus according to example embodiments,
Figure 7 is a schematic diagram of a procedure according to example embodiments,
Figure 8 is a schematic diagram of a procedure according to example embodiments,
Figure 9 is a schematic diagram of a procedure according to example embodiments,
Figure 10 is a schematic diagram of a procedure according to example embodiments,
Figure 11 shows a schematic diagram of an example of a system environment,
Figure 12 shows a schematic diagram of signaling sequences,
Figure 13 shows a schematic diagram of an example of a generative adversarial network architecture,
Figure 14 shows a schematic diagram of signaling sequences according to example embodiments,
Figure 15 shows a schematic diagram of signaling sequences according to example embodiments,
Figure 16 shows a schematic diagram of an example of a generative model descriptor scheme according to example embodiments,
Figure 17 shows a schematic diagram of an example of a generative adversarial network generator model according to example embodiments, and
Figure 18 is a block diagram alternatively illustrating apparatuses according to example embodiments.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to example embodiments, in general terms, there are provided measures and mechanisms for (enabling/realizing) optimized data storage in mobile network scenarios.

Network data analytics function (NWDAF) is a 5G network function that collects data from 5G core (5GC) network functions, performs network analytics, ML-based inference, and provides insights with closed loop automation to authorized data consumers.

Located at core and edge, central and distributed NWDAF instances serve use cases which do not have real-time requirements and use cases which do have real-time, respectively. These are interfaced with functions such as a data and machine learning models repository for continuous training of AI/ML models.

The NWDAF may contain the following logical functions:
- Analytics logical function (AnLF): A logical function in NWDAF, which performs inference, derives analytics information (i.e. derives statistics and/or predictions based on an analytics consumer request), and
- Model training logical function (MTLF): A logical function in NWDAF, which trains ML models and exposes new training services (e.g. providing trained ML model).

As such, an NWDAF may perform
- data collection based on subscription to events provided by AMF, SMF, PCF, UDM, NSACF, AF (directly or via NEF), and OAM,
- analytics and data collection using a data collection coordination function (DCCF), and
- storage and retrieval of information to/from an ADRF.

The 5G system (5GS) architecture allows ADRF to store and retrieve the collected data and/or analytics sent by the consumer. The following options are supported:
- the ADRF exposes the Nadrf service for storage and retrieval of data by other 5GC NFs (e.g. NWDAF) which access the data using Nadrf services, and
- the ADRF stores data received in an Nadrf_DataManagement_StorageRequest sent directly from an NF, or data received in an Ndccf_DataManagement_Notify from the DCCF or Nnwdaf_DataManagement_Notify from the NWDAF.

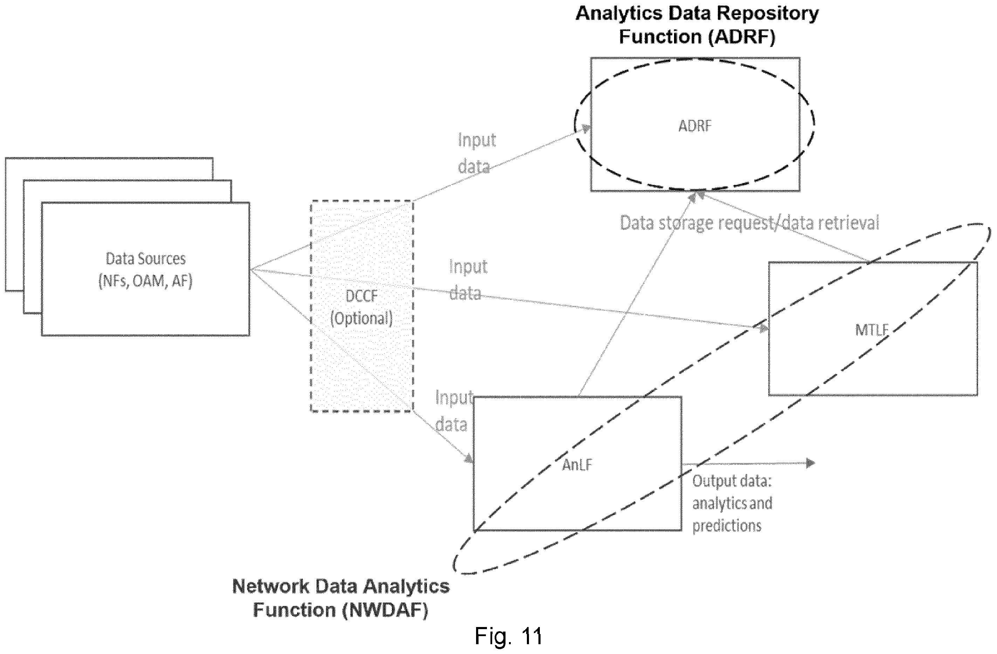

Figure 11 shows a schematic diagram of an example of a system environment, and in particular illustrates an architecture of a connection between an NWDAF and an ADRF as discussed above.

Historical data is data related to a past time period. The period may be fixed by the parameter "Time Window" that is the start and stop time when the requested data or analytics was collected.

After a consumer obtains data and/or analytics, the consumer may store historical data and/or analytics in an ADRF.

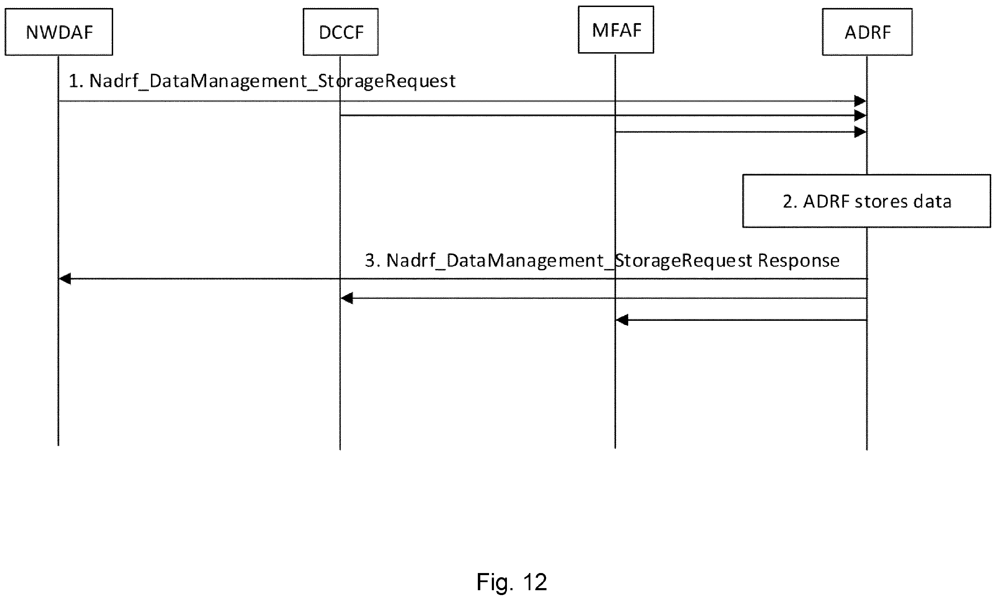

Figure 12 shows a schematic diagram of signaling sequences, and in particular illustrates communication in relation to historical data and analytics storage.

The consumer may directly contact the ADRF or may go via the DCCF or via a messaging framework for storing the historical data and/or analytics in the ADRF.

In particular, the consumer may send data and/or analytics to the ADRF by invoking the Nadrf_DataManagement_StorageRequest (collected data, analytics, service operation, analytics specification or data specification and time window) service operation. The ADRF may, based on implementation, determine whether the same data and/or analytics is already stored or being stored based on the information sent by the consumer NF, and, if the data and/or analytics is already stored or being stored in the ADRF, the ADRF may decide not to store again the data and/or analytics sent by the consumer. The ADRF may send a Nadrf_DataManagement_StorageRequest response message to the consumer, indicating that data and/or analytics is stored, including when the ADRF may have determined that data or analytics is already stored. This process can also be done via notifications.

On the other hand, for a consumer it may be advantageous to retrieve historical data and/or analytics from an ADRF.

This may be used by data consumers (NWDAF, DCCF) to obtain historical data. Heretofore, the ADRF may be requested by the NWDAF or indirectly by DCCF to retrieve data.

In particular, the consumer may send a Nadrf_DataManagement_RetrievalRequest request to the ADRF to retrieve data or analytics for a specified data or analytics collection time window. The ADRF may determine the availability of the data or analytics in its repository and send a success/failure indication in the response to the consumer. If success, the ADRF may send in the response to the consumer either the data or analytics, or instructions for fetching the data or analytics using Nadrf_DataManagement_RetrievalNotify.

A consumer may also send a Nadrf_DataManagement_RetrievalSubscribe request to the ADRF to retrieve data or analytics for a specified data or analytics collection time window and to receive future notifications containing the corresponding data or analytics received by ADRF using Nadrf_DataManagement_RetrievalNotify. If the time window includes the future and the ADRF has subscribed to receive the data or analytics, subsequent notifications received by the ADRF are sent by the ADRF to the consumer. The Nadrf_DataManagement_RetrievalNotify service operation provides consumers with either data or analytics from an ADRF, or instructions to fetch the data or analytics from an ADRF.

5G-advanced is the step before 6^{th} Generation 6G which will open the door for pervasive AI and therefore, for many new ML-based services.

Thus, as mentioned above, with the increasing need in 5G and beyond mobile networks to use AI/ML, a multiplicity of ML tasks will be executed potentially leading to an explosion of collected data and thus, amount of historical data to be stored, and with the ADRF being the 5GC NF deputed to store historical data and analytics in 5G network, it will be important for it to save or limit resources for historical data storage while maintaining quality of historical data stored.

Hence, in brief, according to example embodiments, an NWDAF can use generative models (GM) to produce input data for inference and/or training, and the usage of the GM, and possibly the GM instance too, is included in the services exposed by ADRF, to reduce the volume of transferred and stored data.

GM is a deep learning-based tool to generate synthetic data that has the same statistical properties as the source data. By using GMs which size in amount of bit may be smaller than the size of a source data, the size of historical data stored can be significantly reduced.

Moreover, using GMs instead of raw data provides a higher flexibility, as e.g. ML tasks (such as those run by NWDAF) can locally generate an exact amount of data they need.

A data consumer may accept to use synthetic-data instead of real-data, for example for performing an initial model training.

GMs may address numerical, categorical, data, text.

Implicit distribution GMs as a generative adversarial network (GAN) are particularly referred to for example embodiments. Implicit distribution GMs as a GAN do not require an explicit definition for their model distribution. Instead, these models train themselves by indirectly sampling data from their parameterized distribution. In other words, implicit distribution GMs as a GAN do not require any information on data distribution to enable the generation of synthetic data which statistics are close to the data source statistics.

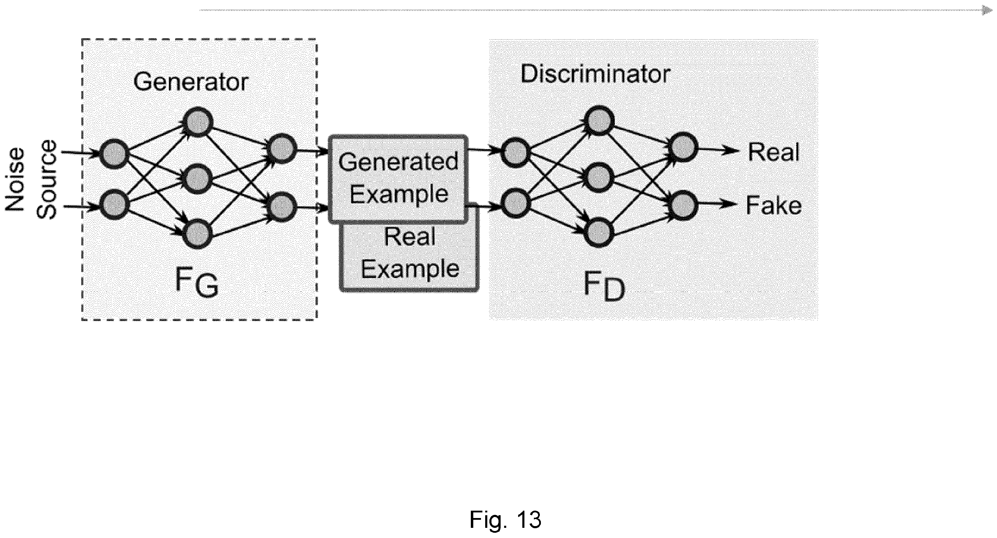

Figure 13 shows a schematic diagram of an example of a GAN architecture.

GAN is a type of deep learning techniques. In the scope of generative models, GAN has emerged recently as a powerful tool for learning the probability and modelling complex data distribution. GAN is an unsupervised learning method for estimating density function via an adversarial process. GAN is capable of training in a completely unsupervised and unconditional fashion, meaning no labels are involved in the training process, and consequently, no process of label generation is required for operators that want to use them. This task is based on a combination of two adversarial models, a generator G and a discriminator D, that work together or simultaneously train. G and D models are neural networks with weight and bias parameters denoted as θ. G is used to generate data samples, while D tries to discriminate between real or fake data as seen in Figure 13. From a simple noise source, the GAN technique is able to generate various data distributions while directly learning the joint distribution of multiple random variables.

By appropriately training the two models, it is possible to obtain a generator model that takes sampling vectors from random or targeted distribution as input and generates a sample in the problem domain as output. Thus, an opportunely trained generator model can generate data with a desired distribution. In the context of mobile networks this means data with same distribution of data collected from the network.

As mentioned above, according to example embodiments, an NWDAF can use generative models (GM) to produce input data for inference and/or training, and the usage of the GM, and possibly the GM instance too, is included in the services exposed by ADRF, to reduce the volume of transferred and stored data.

Considering this, according to example embodiments, historical data storage management is provided for NWDAF.

Namely, when a NWDAF makes a request to retrieve data from ADRF, according to example embodiments, the NWDAF indicates its capability to use GMs. Then, according to example embodiments, the ADRF provides the requested data along with a GM (GMs) and its descriptor for the NWDAF to use it to generate further data.

On the other hand, when the NWDAF requests the ADRF to store data, according to example embodiments, the NWDAF also indicates the GMs used and/or requests to store the GM. This way, less data can be stored by the ADRF, and when subsequent data retrieval requests are issued by NWDAFs for the same dataset, according to example embodiments, the ADRF sends the GM along with the stored data, which are expected to be significantly less than the data actually needed by the requesting NWDAF for its operations.

Summarizing, according to example embodiments, the ADRF is the data storage used by NWDAF to store and retrieve collected data and analytics for subsequent lookups/collections.

The collected data may come from the sources like Core, radio access network (RAN), from external like Core, operations, administration and maintenance (OAM) (e.g. performance management (PM), key performance indicators (KPI)), and from user equipments (UE) (e.g. in Rel-17).

Only data that is requested may be stored in ADRF.

According to example embodiments, the ADRF can use GMs to reduce the amount of data stored (i.e., at rest). Then, the GMs can be used to reduce the amount of data in transit in anticipation to explosion of historical data to be stored.

In particular, according to example embodiments, when an NWDAF retrieves data from an ADRF, the NWDAF
- receives from the ADRF a portion of data plus the GM(s) and its(their) descriptor, and
- learns from the GM descriptor how to use the GM(s) to generate synthetic data.

Further, according to example embodiments, when an NWDAF requests an ADRF to store data, the ADRF
- receives from the NWDAF also an indicator related to a GM, implying that such NWDAF is able to execute that GM instance, and
- uses the GM indication provided by the NWDAF to satisfy the next data retrieval requests coming from that NWDAF, i.e., to send data + GM.

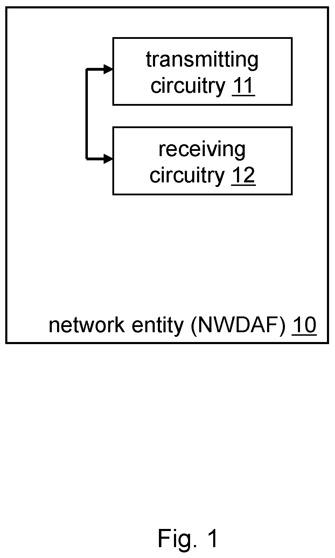

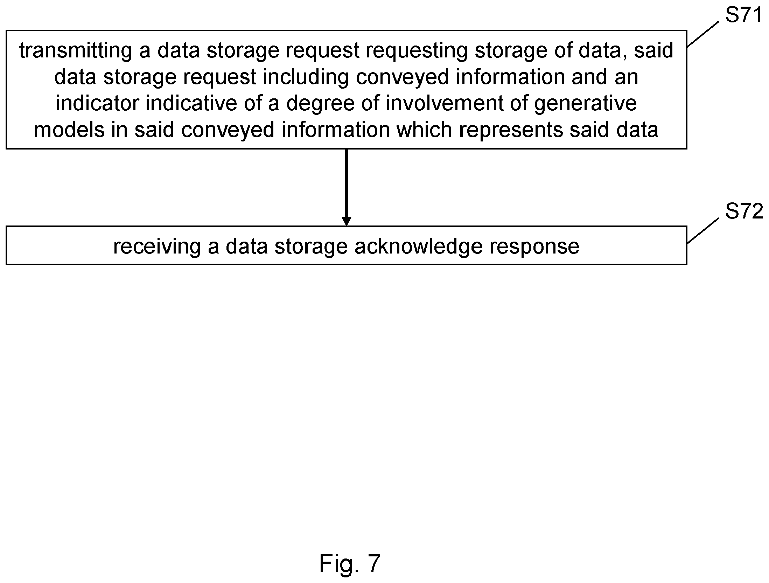

Some embodiments are specified below in more detail. Figure 1 is a block diagram illustrating an apparatus according to example embodiments. The apparatus is a network node or entity 10 such as a network data analytics function (NWDAF) or a network node or entity 10 implementing an NWDAF, the apparatus comprising a transmitting circuitry 11 and a receiving circuitry 12. The transmitting circuitry 11 transmits a data storage request requesting storage of data, said data storage request including conveyed information and an indicator indicative of a degree of involvement of generative models in said conveyed information which represents said data. The receiving circuitry 12 receives a data storage acknowledge response. Figure 7 is a schematic diagram of a procedure according to example embodiments. The apparatus according to Figure 1 may perform the method of Figure 7 but is not limited to this method. The method of Figure 7 may be performed by the apparatus of Figure 1 but is not limited to being performed by this apparatus.

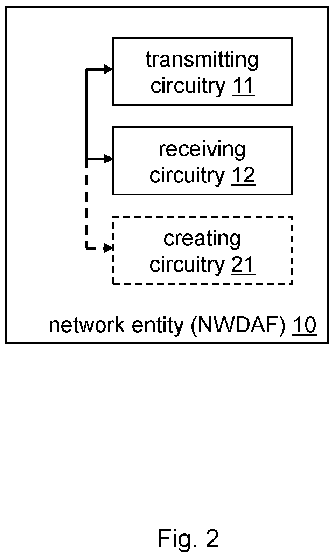

As shown in Figure 7, a procedure according to example embodiments comprises an operation of transmitting (S71) a data storage request requesting storage of data, said data storage request including conveyed information and an indicator indicative of a degree of involvement of generative models in said conveyed information which represents said data, and an operation of receiving (S72) a data storage acknowledge response. Figure 2 is a block diagram illustrating an apparatus according to example embodiments. In particular, Figure 2 illustrates a variation of the apparatus shown in Figure 1. The apparatus according to Figure 2 may thus further comprise a creating circuitry 21.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to further example embodiments, said indicator is indicative of that said conveyed information includes a full data set, and said conveyed information includes said full data set.

According to further embodiments, said indicator is indicative of that said conveyed information includes a partial data set and at least one generative model configured to create a full data set based on said partial data set, and said conveyed information includes said partial data set and said at least one generative model.

According to further example embodiments, said indicator is indicative of that said conveyed information includes at least one generative model configured to create a full data set without reference to a part of said data set, and said conveyed information includes said at least one generative model. According to further example embodiments, said conveyed information includes a generative model description specifying utilization of said at least one generative model.

According to a variation of the procedure shown in Figure 7, exemplary additional operations are given, which are inherently independent from each other as such. According to such variation, an exemplary method according to example embodiments may comprise an operation of creating said data utilizing said at least one generative model.

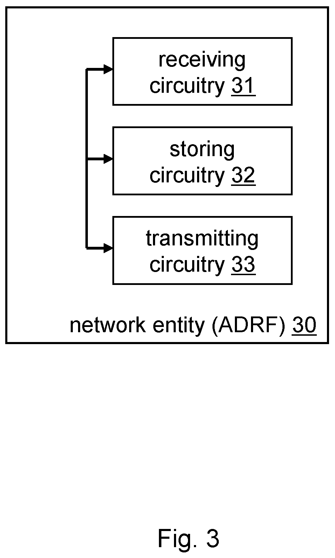

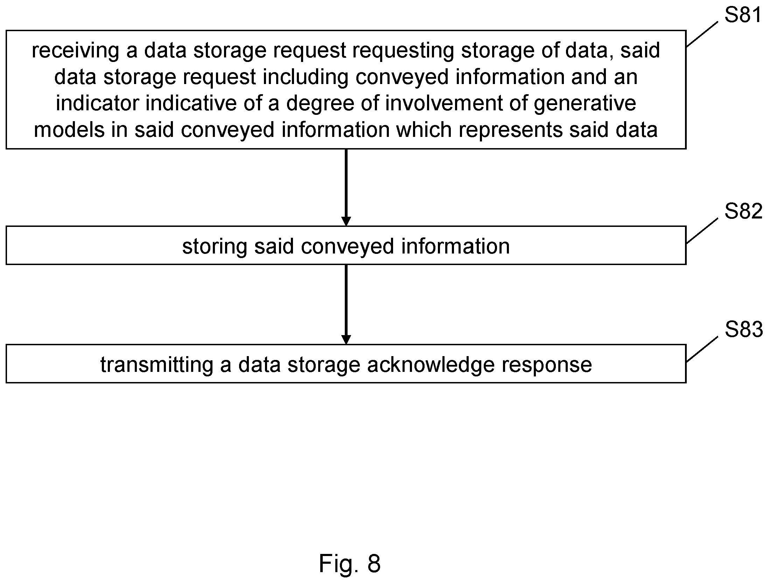

Figure 3 is a block diagram illustrating an apparatus according to example embodiments. The apparatus is a network node or entity 30 such as an analytics data repository function (ADRF) or a network node or entity 30 implementing an ADRF, the apparatus comprising a receiving circuitry 31, a storing circuitry 32, and a transmitting circuitry 33. The receiving circuitry 31 receives a data storage request requesting storage of data, said data storage request including conveyed information and an indicator indicative of a degree of involvement of generative models in said conveyed information which represents said data. The storing circuitry 32 stores said conveyed information. The transmitting circuitry 33 transmits a data storage acknowledge response. Figure 8 is a schematic diagram of a procedure according to example embodiments. The apparatus according to Figure 3 may perform the method of Figure 8 but is not limited to this method. The method of Figure 8 may be performed by the apparatus of Figure 3 but is not limited to being performed by this apparatus.

As shown in Figure 8, a procedure according to example embodiments comprises an operation of receiving (S81) a data storage request requesting storage of data, said data storage request including conveyed information and an indicator indicative of a degree of involvement of generative models in said conveyed information which represents said data, an operation of storing (S82) said conveyed information, and an operation of transmitting (S83) a data storage acknowledge response.

In an embodiment at least some of the functionalities of the apparatus shown in Figure 3 may be shared between two physically separate devices forming one operational entity. Therefore, the apparatus may be seen to depict the operational entity comprising one or more physically separate devices for executing at least some of the described processes.

According to further example embodiments, said indicator is indicative of that said conveyed information includes a full data set, and said conveyed information includes said full data set.

According to further example embodiments, said indicator is indicative of that said conveyed information includes a partial data set and at least one generative model configured to create a full data set based on said partial data set, and said conveyed information includes said partial data set and said at least one generative model.

According to further example embodiments, said indicator is indicative of that said conveyed information includes at least one generative model configured to create a full data set without reference to a part of said data set, and said conveyed information includes said at least one generative model.

According to further example embodiments, said conveyed information includes a generative model description specifying utilization of said at least one generative model.

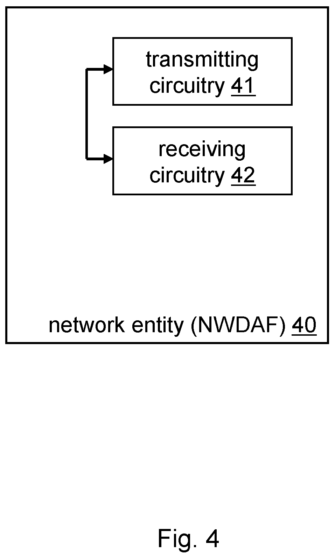

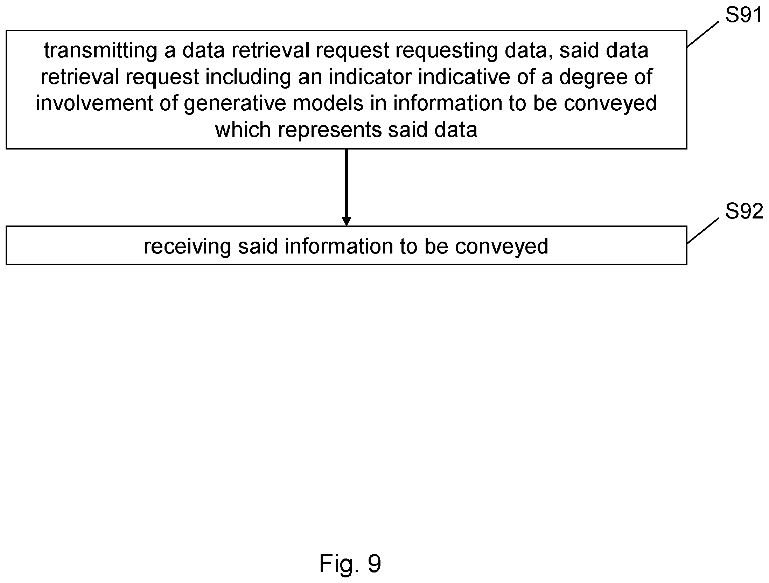

Figure 4 is a block diagram illustrating an apparatus according to example embodiments. The apparatus may be a network node or entity 40 such as a network data analytics function (NWDAF) or a network node or entity 40 implementing an NWDAF, the apparatus comprising a transmitting circuitry 41 and a receiving circuitry 42. The transmitting circuitry 41 transmits a data retrieval request requesting data, said data retrieval request including an indicator indicative of a degree of involvement of generative models in information to be conveyed which represents said data. The receiving circuitry 42 receives said information to be conveyed. Figure 9 is a schematic diagram of a procedure according to example embodiments. The apparatus according to Figure 4 may perform the method of Figure 9 but is not limited to this method. The method of Figure 9 may be performed by the apparatus of Figure 4 but is not limited to being performed by this apparatus.

As shown in Figure 9, a procedure according to example embodiments comprises an operation of transmitting (S91) a data retrieval request requesting data, said data retrieval request including an indicator indicative of a degree of involvement of generative models in information to be conveyed which represents said data, and an operation of receiving (S92) said information to be conveyed.

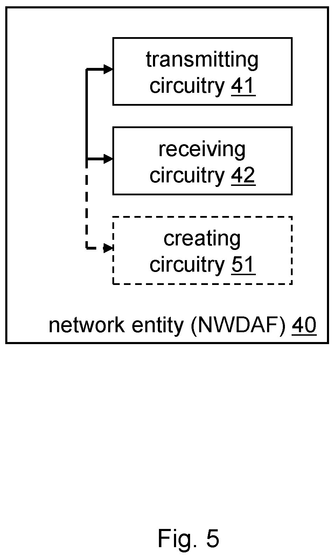

Figure 5 is a block diagram illustrating an apparatus according to example embodiments. In particular, Figure 5 illustrates a variation of the apparatus shown in Figure 4. The apparatus according to Figure 5 may thus further comprise a creating circuitry 51.

In an embodiment at least some of the functionalities of the apparatus shown in Figure 4 (or 5) may be shared between two physically separate devices forming one operational entity. Therefore, the apparatus may be seen to depict the operational entity comprising one or more physically separate devices for executing at least some of the described processes.

According to further example embodiments, said indicator is indicative of that said information to be conveyed includes a full data set, and said information to be conveyed includes said full data set.

According to further example embodiments, said indicator is indicative of that said information to be conveyed includes a partial data set and at least one generative model configured to create a full data set based on said partial data set, and said information to be conveyed includes said partial data set and said at least one generative model.

According to further example embodiments, said indicator is indicative of that said information to be conveyed includes at least one generative model configured to create a full data set without reference to a part of said data set, and said information to be conveyed includes said at least one generative model.

According to further example embodiments, said information to be conveyed includes a generative model description specifying utilization of said at least one generative model.

According to further example embodiments, said data retrieval request includes a generative model support indicator indicating support of generative models for creation of data sets.

According to a variation of the procedure shown in Figure 9, exemplary additional operations are given, which are inherently independent from each other as such. According to such variation, an exemplary method according to example embodiments may comprise an operation of creating said data utilizing said information to be conveyed.

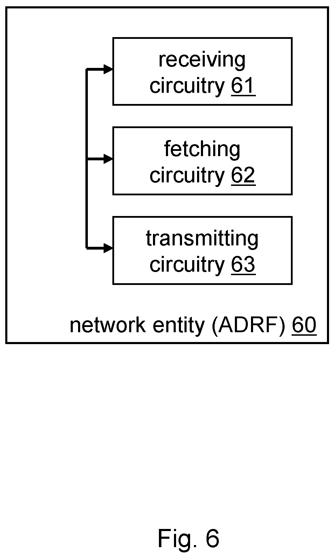

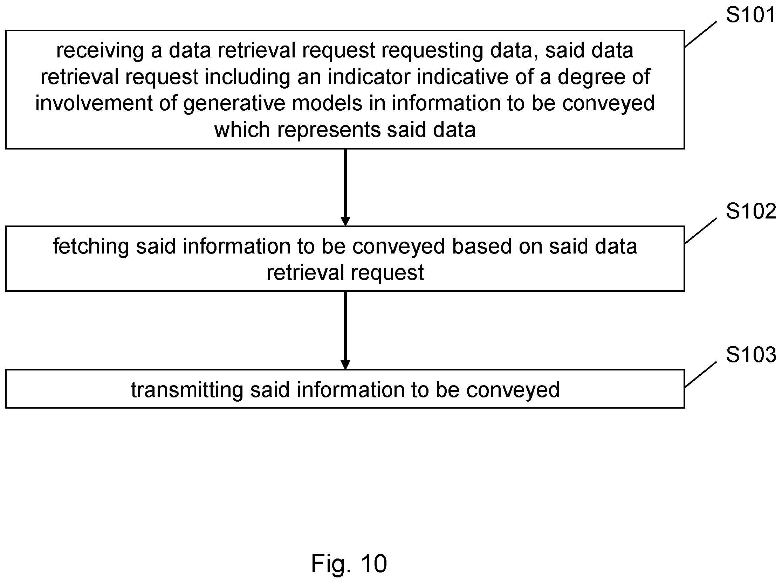

Figure 6 is a block diagram illustrating an apparatus according to example embodiments. The apparatus may be a network node or entity 60 such as an analytics data repository function (ADRF) or a network node or entity 60 implementing an ADRF, the apparatus comprising a receiving circuitry 61, a fetching circuitry 62, and a transmitting circuitry 63. The receiving circuitry 61 receives a data retrieval request requesting data, said data retrieval request including an indicator indicative of a degree of involvement of generative models in information to be conveyed which represents said data. The fetching circuitry 62 fetches said information to be conveyed based on said data retrieval request. The transmitting circuitry 63 transmits said information to be conveyed. Figure 10 is a schematic diagram of a procedure according to example embodiments. The apparatus according to Figure 6 may perform the method of Figure 10 but is not limited to this method. The method of Figure 10 may be performed by the apparatus of Figure 6 but is not limited to being performed by this apparatus.

As shown in Figure 10, a procedure according to example embodiments comprises an operation of receiving (S101) a data retrieval request requesting data, said data retrieval request including an indicator indicative of a degree of involvement of generative models in information to be conveyed which represents said data, an operation of fetching (S102) said information to be conveyed based on said data retrieval request, and an operation of transmitting (S103) said information to be conveyed.

In an embodiment at least some of the functionalities of the apparatus shown in Figure 6 may be shared between two physically separate devices forming one operational entity. Therefore, the apparatus may be seen to depict the operational entity comprising one or more physically separate devices for executing at least some of the described processes.

According to further example embodiments, said indicator is indicative of that said information to be conveyed includes a full data set, and said information to be conveyed includes said full data set.

According to further example embodiments, said indicator is indicative of that said information to be conveyed includes a partial data set and at least one generative model configured to create a full data set based on said partial data set, and said information to be conveyed includes said partial data set and said at least one generative model.

According to further example embodiments, said indicator is indicative of that said information to be conveyed includes at least one generative model configured to create a full data set without reference to a part of said data set, and said information to be conveyed includes said at least one generative model.

According to further example embodiments, said information to be conveyed includes a generative model description specifying utilization of said at least one generative model.

According to further example embodiments, said data retrieval request includes a generative model support indicator indicating support of generative models for creation of data sets.

Example embodiments outlined and specified above are explained below in more specific terms.

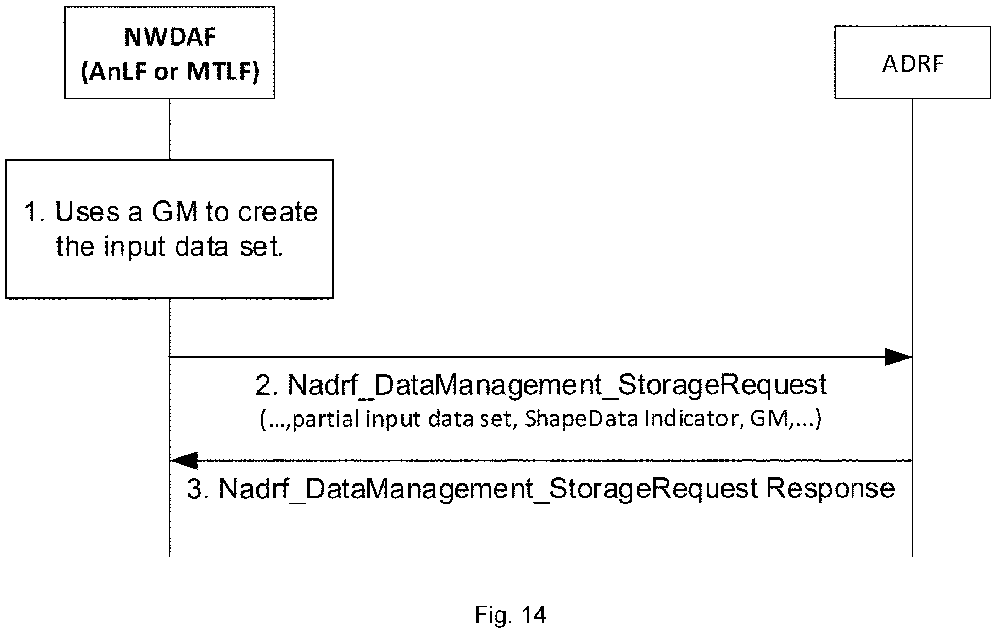

Figure 14 shows a schematic diagram of signaling sequences according to example embodiments, and in particular illustrates a procedure according to which an NWDAF requests the ADRF to store historical data with a GM according to example embodiments.

Here, while Figure 14 shows an example in which the NWDAF requests the ADRF to store a partial data set and the GM used to create the full dataset, example embodiments are not limited thereto, as specified above and explained further below.

In a step 1 of Figure 14, according to example embodiments, the NWDAF uses a GM to create the input data set needed for its operations, i.e., analytics and/or training.

In a step 2 of Figure 14, according to example embodiments, the NWDAF requests the ADRF to store partially the input data set, including a ShapeData indicator to inform that the data is synthetic along with the GM used to create the data set.

In a step 3 of Figure 14, according to example embodiments, the ADRF sends a response to the NWDAF to acknowledge the operation.

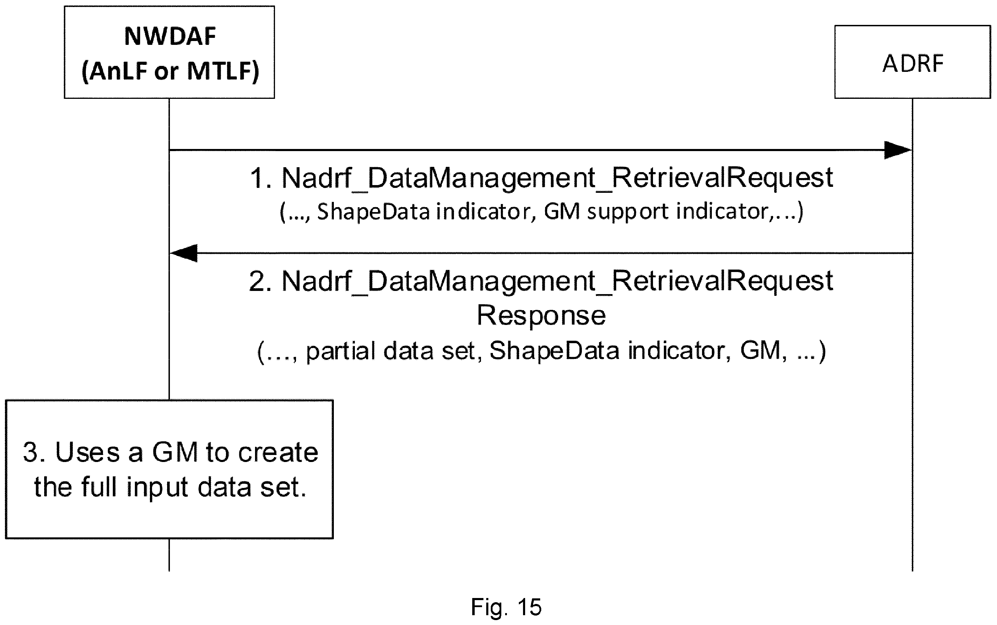

Figure 15 shows a schematic diagram of signaling sequences according to example embodiments, and in particular illustrates a procedure according to which an NWDAF requests the ADRF to retrieve historical data with a GM according to example embodiments.

Here, while Figure 15 shows an example in which the NWDAF retrieves from the ADRF a partial data set and the GM used to create the full dataset, example embodiments are not limited thereto, as specified above and explained further below.

In a step 1 of Figure 15, according to example embodiments, the NWDAF sends a request to the ADRF in order to retrieve data, including a ShapeData indicator to inform that the data can be used to feed a GM, along with the GM support indicator.

In a step 2 of Figure 15, according to example embodiments, the ADRF sends the requested data to the NWDAF, along with the supported GM.

In a step 3 of Figure 15, according to example embodiments, the NWDAF uses the GM to create the input data set needed for its operations, i.e., analytics and/or training.

According to example embodiments, a GM can be created by a new logical function of an NWDAF, namely an MTLF dedicated to create GMs, referred to as generative model training logical function (GMTLF), which adds support to create GMs.

Further, according to example embodiments, a GM can be created by another NWDAF including only an MTLF dedicated to create GMs, which adds support to create GMs as well.

In both cases, signaling and specific exchanges are established between NWDAF and GMTLF.

An NWDAF according to example embodiments
- supports to run GM(s) to create data sets,
- adds the ShapeData and/or GM support indicators in the service operations, and
- sends a GM and/or a GM descriptor to be stored.

An ADRF according to example embodiments
- adds the ShapeData in the service operations, and
- sends a GM or a GM descriptor to instruct/allow the NWDAF to generate data using the GM.

The ShapeData indicator (i.e., being an example for the indicator indicative of a degree of involvement of generative models in conveyed information/information to be conveyed) according to example embodiments is an indicator that informs whether the input data is sent
- as full data set,
- as partial data set and a GMs set (i.e., one or more generative models), or
- as full GMs set (i.e., one or more generative models without the need for full/partial data).

According to example embodiments, the ShapeData indicator is a numerical value X. If X = "0", then full data. If X = "1", then partial data and GMs. If X= "2", then full GMs set.

However, the ShapeData indicator is not limited to such type nor structure nor logical denotation.

The GM support indicator (i.e., being an example for the generative model support indicator indicating support of generative models for creation of data sets) according to example embodiments is an indicator that informs about support to run GM to create data sets.

The GM descriptor (i.e., being an example for the generative model description specifying utilization of said at least one generative model) according to example embodiments is a message/field that contains all information/metadata/overhead that fixes e.g the number of GMs, the architecture and model of GM (HyperParameters and training parameters) and an execution file (optional), e.g. Docker file (Image = libraries + file) or MLApp (application programming interface (API)).

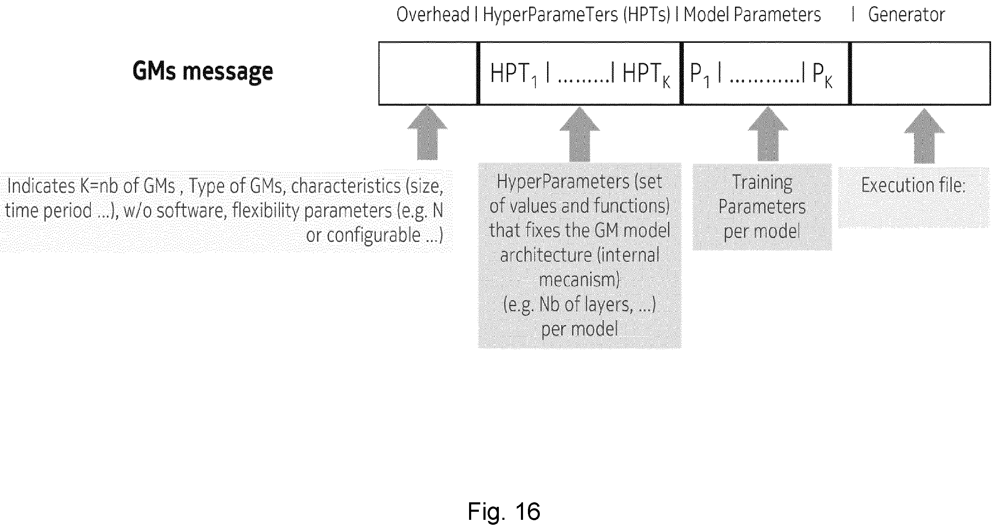

Figure 16 shows a schematic diagram of an example of a generative model descriptor scheme according to example embodiments.

In case of GAN, according to example embodiments, only the generator model may be transferred. The generator model is comprises (1) HyperParameters, (2) Training Parameters, and (3) a Data Generation Execution file.

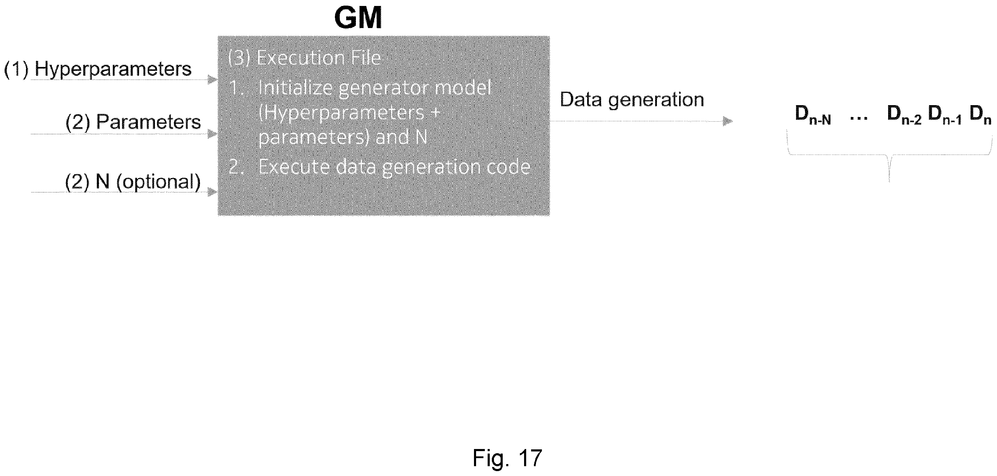

Figure 17 shows a schematic diagram of an example of a generative adversarial network generator model according to example embodiments, and in particular illustrates a generator model entity of GAN, particularly a sequence of N+1 data, where N is the number of data that GM can generate.

According to example embodiments, advantageously, less data can be stored by the ADRF, i.e., less data can be necessary to be stored by the ADRF. In other words, the amount of historical data to store and to deliver in case of ML tasks multiplicity is limited.

Further, according to example embodiments, advantageously, enhancements can be provided for storage of data and/or analytics in ADRF, NWDAF and/or data source NF.

Still further, according to example embodiments, advantageously, enhancements can be provided to further reduce signaling and data traffic and the impact of obtaining data on data sources related to network analytics.

Fast and flexible access can be provided in particular for big historical data processing. For ML tasks (as MLTF or AnLF), local flexibility to generate an exact amount of data required can be provided. Further, for providers, control of the amount of data GMs can generate can be provided.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

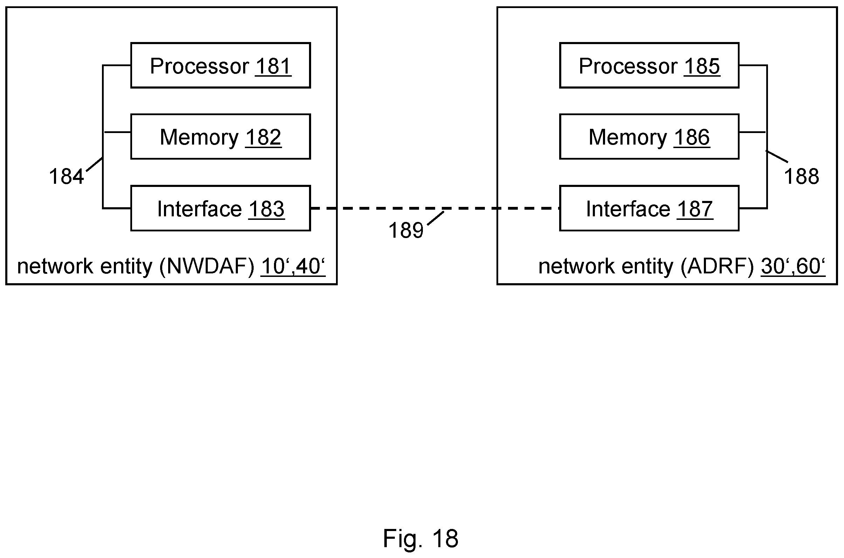

In Figure 18, an alternative illustration of apparatuses according to example embodiments is depicted. As indicated in Figure 18, according to example embodiments, the apparatus (network entity) 10', 40' (corresponding to the network entity 10, 40) comprises a processor 181, a memory 182 and an interface 183, which are connected by a bus 184 or the like. Further, the apparatus (network entity) 30', 60' (corresponding to the network entity 30, 60) comprises a processor 185, a memory 186 and an interface 187, which are connected by a bus 188 or the like. The apparatuses may be connected via link 189, respectively.

The processor 181/185 and/or the interface 183/187 may also include a modem or the like to facilitate communication over a (hardwire or wireless) link, respectively. The interface 183/187 may include a suitable transceiver coupled to one or more antennas or communication means for (hardwire or wireless) communications with the linked or connected device(s), respectively. The interface 183/187 is generally configured to communicate with at least one other apparatus, i.e. the interface thereof.

The memory 182/186 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the network entity 10 comprises at least one processor 181, at least one memory 182 including computer program code, and at least one interface 183 configured for communication with at least another apparatus. The processor (i.e. the at least one processor 181, with the at least one memory 182 and the computer program code) is configured to perform transmitting a data storage request requesting storage of data, said data storage request including conveyed information and an indicator indicative of a degree of involvement of generative models in said conveyed information which represents said data (thus the apparatus comprising corresponding means for transmitting), and to perform receiving a data storage acknowledge response (thus the apparatus comprising corresponding means for receiving).

According to example embodiments, an apparatus representing the network entity 30 comprises at least one processor 185, at least one memory 186 including computer program code, and at least one interface 187 configured for communication with at least another apparatus. The processor (i.e. the at least one processor 185, with the at least one memory 186 and the computer program code) is configured to perform receiving a data storage request requesting storage of data, said data storage request including conveyed information and an indicator indicative of a degree of involvement of generative models in said conveyed information which represents said data (thus the apparatus comprising corresponding means for receiving), to perform storing said conveyed information (thus the apparatus comprising corresponding means for storing), and to perform transmitting a data storage acknowledge response (thus the apparatus comprising corresponding means for transmitting).

According to example embodiments, an apparatus representing the network entity 40 comprises at least one processor 181, at least one memory 182 including computer program code, and at least one interface 183 configured for communication with at least another apparatus. The processor (i.e. the at least one processor 181, with the at least one memory 182 and the computer program code) is configured to perform transmitting a data retrieval request requesting data, said data retrieval request including an indicator indicative of a degree of involvement of generative models in information to be conveyed which represents said data (thus the apparatus comprising corresponding means for transmitting), and to perform receiving said information to be conveyed (thus the apparatus comprising corresponding means for receiving).

According to example embodiments, an apparatus representing the network entity 60 comprises at least one processor 185, at least one memory 186 including computer program code, and at least one interface 187 configured for communication with at least another apparatus. The processor (i.e. the at least one processor 185, with the at least one memory 186 and the computer program code) is configured to perform receiving a data retrieval request requesting data, said data retrieval request including an indicator indicative of a degree of involvement of generative models in information to be conveyed which represents said data (thus the apparatus comprising corresponding means for receiving), to perform fetching said information to be conveyed based on said data retrieval request (thus the apparatus comprising corresponding means for fetching), and to perform transmitting said information to be conveyed (thus the apparatus comprising corresponding means for transmitting).

For further details regarding the operability/functionality of the individual apparatuses, reference is made to the above description in connection with any one of Figures 1 to 17, respectively.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

In view of the above, there are provided measures for optimized data storage in mobile network scenarios. Such measures comprise transmitting a data storage request requesting storage of data, said data storage request including conveyed information and an indicator indicative of a degree of involvement of generative models in said conveyed information which represents said data, and receiving a data storage acknowledge *response.*

### List of acronyms and abbreviations

- 3GPP: 3rd Generation Partnership Project
- 5G: 5th Generation
- 5GC: 5G core
- 5GS: 5G system
- ADRF: analytics data repository function
- AI: artificial intelligence
- AnLF: analytics logical function
- API: application programming interface
- DCCF: data collection coordination function
- GAN: generative adversarial network
- GM: generative model
- GMTLF: generative model training logical function
- KPI: key performance indicator
- ML: machine learning
- MTLF: model training logical function
- NF: network function
- NWDAF: network data analytics function
- OAM: operations, administration and maintenance
- PM: performance management
- RAN: radio access network
- UE: user equipment

## Claims

1. A method of a network entity (10) implementing a network data analytics function, the method comprising
transmitting (S71), towards a network entity (30) implementing an analytics data repository function, a data storage request requesting storage of historical data, said data storage request including conveyed information and an indicator indicative of a degree of involvement of generative models in said conveyed information which represents said historical data, and
receiving (S72) a data storage acknowledge response, wherein
said indicator is indicative of that said conveyed information includes a partial data set and at least one generative model configured to create a full data set based on said partial data set, and
said conveyed information includes said partial data set and said at least one generative model.

2. The method according to claim 1, wherein
said conveyed information includes a generative model description specifying utilization of said at least one generative model.

3. The method according to claim 1 or 2, further comprising
creating said historical data utilizing said at least one generative model.

4. A method of a network entity (30) implementing an analytics data repository function, the method comprising
receiving (S81), from a network entity (10) implementing a network data analytics function, a data storage request requesting storage of historical data, said data storage request including conveyed information and an indicator indicative of a degree of involvement of generative models in said conveyed information which represents said historical data,
storing (S82) said conveyed information, and
transmitting (S83) a data storage acknowledge response, wherein
said indicator is indicative of that said conveyed information includes a partial data set and at least one generative model configured to create a full data set based on said partial data set, and
said conveyed information includes said partial data set and said at least one generative model.

5. The method according to claim 4, wherein
said conveyed information includes a generative model description specifying utilization of said at least one generative model.

6. An apparatus of a network entity (10) implementing a network data analytics function, the apparatus comprising
transmitting circuitry (11) configured to transmit, towards a network entity (30) implementing an analytics data repository function, a data storage request requesting storage of historical data, said data storage request including conveyed information and an indicator indicative of a degree of involvement of generative models in said conveyed information which represents said historical data, and
receiving circuitry (12) configured to receive a data storage acknowledge response, wherein
said indicator is indicative of that said conveyed information includes a partial data set and at least one generative model configured to create a full data set based on said partial data set, and
said conveyed information includes said partial data set and said at least one generative model.

7. An apparatus of a network entity (30) implementing an analytics data repository function, the apparatus comprising
receiving circuitry (31) configured to receive, from a network entity (10) implementing a network data analytics function, a data storage request requesting storage of historical data, said data storage request including conveyed information and an indicator indicative of a degree of involvement of generative models in said conveyed information which represents said historical data,
storing circuitry (32) configured to store said conveyed information, and
transmitting circuitry (33) configured to transmit a data storage acknowledge response, wherein
said indicator is indicative of that said conveyed information includes a partial data set and at least one generative model configured to create a full data set based on said partial data set, and
said conveyed information includes said partial data set and said at least one generative model.

## Patentansprüche

1. Verfahren einer Netzwerkentität (10), die eine Netzwerkdatenanalysefunktion implementiert, wobei das Verfahren Folgendes umfasst
Übertragen (S71) einer Datenspeicheranforderung, die eine Speicherung von Verlaufsdaten anfordert, zu einer Netzwerkentität (30), die eine Analysedatenrepositoriumsfunktion implementiert, wobei die Datenspeicheranforderung übermittelte Informationen und einen Indikator beinhaltet, der einen Grad einer Beteiligung von generativen Modellen an den übermittelten Informationen anzeigt, die die Verlaufsdaten repräsentieren, und
Empfangen (S72) einer Datenspeicherbestätigungsantwort, wobei
der Indikator anzeigt, dass die übermittelten Informationen einen teilweisen Datensatz und mindestens ein generatives Modell beinhalten, das dazu ausgelegt ist, auf Basis des teilweisen Datensatzes einen vollständigen Datensatz zu erstellen, und
die übermittelten Informationen den teilweisen Datensatz und das mindestens eine generative Modell beinhalten.

2. Verfahren nach Anspruch 1, wobei
die übermittelten Informationen eine Beschreibung eines generativen Modells beinhalten, die eine Nutzung des mindestens einen generativen Modells spezifiziert.

3. Verfahren nach Anspruch 1 oder 2, das ferner Folgendes umfasst
Erstellen der Verlaufsdaten unter Verwendung des mindestens einen generativen Modells.

4. Verfahren einer Netzwerkentität (30), die eine Analysedatenrepositoriumsfunktion implementiert, wobei das Verfahren Folgendes umfasst
Empfangen (S81) einer Datenspeicheranforderung, die eine Speicherung von Verlaufsdaten anfordert, von einer Netzwerkentität (10), die eine Netzwerkdatenanalysefunktion implementiert, wobei die Datenspeicheranforderung übermittelte Informationen und einen Indikator beinhaltet, der einen Grad einer Beteiligung von generativen Modellen an den übermittelten Informationen anzeigt, die die Verlaufsdaten repräsentieren,
Speichern (S82) der übermittelten Informationen, und
Übertragen (S83) einer Datenspeicherbestätigungsantwort, wobei
der Indikator anzeigt, dass die übermittelten Informationen einen teilweisen Datensatz und mindestens ein generatives Modell beinhalten, das dazu ausgelegt ist, auf Basis des teilweisen Datensatzes einen vollständigen Datensatz zu erstellen, und
die übermittelten Informationen den teilweisen Datensatz und das mindestens eine generative Modell beinhalten.

5. Verfahren nach Anspruch 4, wobei
die übermittelten Informationen eine Beschreibung eines generativen Modells beinhalten, die eine Nutzung des mindestens einen generativen Modells spezifiziert.

6. Einrichtung einer Netzwerkentität (10), die eine Netzwerkdatenanalysefunktion implementiert, wobei die Einrichtung Folgendes umfasst
eine Übertragungsschaltung (11), die dazu ausgelegt ist, eine Datenspeicheranforderung, die eine Speicherung von Verlaufsdaten anfordert, zu einer Netzwerkentität (30), die eine Analysedatenrepositoriumsfunktion implementiert, zu übertragen, wobei die Datenspeicheranforderung übermittelte Informationen und einen Indikator beinhaltet, der einen Grad einer Beteiligung von generativen Modellen an den übermittelten Informationen anzeigt, die die Verlaufsdaten repräsentieren, und
eine Empfangsschaltung (12), die dazu ausgelegt ist, eine Datenspeicherbestätigungsantwort zu empfangen, wobei
der Indikator anzeigt, dass die übermittelten Informationen einen teilweisen Datensatz und mindestens ein generatives Modell beinhalten, das dazu ausgelegt ist, auf Basis des teilweisen Datensatzes einen vollständigen Datensatz zu erstellen, und
die übermittelten Informationen den teilweisen Datensatz und das mindestens eine generative Modell beinhalten.

7. Einrichtung einer Netzwerkentität (30), die eine Analysedatenrepositoriumsfunktion implementiert, wobei die Einrichtung Folgendes umfasst
eine Empfangsschaltung (31), die dazu ausgelegt ist, eine Datenspeicheranforderung, die eine Speicherung von Verlaufsdaten anfordert, von einer Netzwerkentität (10), die eine Netzwerkdatenanalysefunktion implementiert, zu empfangen, wobei die Datenspeicheranforderung übermittelte Informationen und einen Indikator beinhaltet, der einen Grad einer Beteiligung von generativen Modellen an den übermittelten Informationen anzeigt, die die Verlaufsdaten repräsentieren,
eine Speicherschaltung (32), die dazu ausgelegt ist, die übermittelten Informationen zu speichern, und
eine Übertragungsschaltung (33), die dazu ausgelegt ist, eine Datenspeicherbestätigungsantwort zu übertragen, wobei
der Indikator anzeigt, dass die übermittelten Informationen einen teilweisen Datensatz und mindestens ein generatives Modell beinhalten, das dazu ausgelegt ist, auf Basis des teilweisen Datensatzes einen vollständigen Datensatz zu erstellen, und
die übermittelten Informationen den teilweisen Datensatz und das mindestens eine generative Modell beinhalten.

## Revendications

1. Procédé d'une entité de réseau (10) mettant en œuvre une fonction d'analyse de données de réseau, le procédé comprenant les étapes suivantes
transmettre (S71) à une entité de réseau (30) mettant en œuvre une fonction de référentiel de données analytiques une demande de stockage de données demandant le stockage de données historiques, ladite demande de stockage de données comportant des informations véhiculées et un indicateur indiquant un degré d'implication de modèles génératifs dans lesdites informations véhiculées qui représentent lesdites données historiques, et
recevoir (S72) une réponse d'accusé de réception de stockage de données, dans lequel
ledit indicateur indique que lesdites informations véhiculées comportent un ensemble de données partiel et au moins un modèle génératif configuré pour créer un ensemble de données complet sur la base dudit ensemble de données partiel, et
lesdites informations véhiculées comportent ledit ensemble de données partiel et ledit au moins un modèle génératif.

2. Procédé selon la revendication 1, dans lequel
lesdites informations véhiculées comportent une description de modèle génératif spécifiant l'utilisation dudit au moins un modèle génératif.

3. Procédé selon la revendication 1 ou 2, comprenant en outre
la création desdites données historiques en utilisant ledit au moins un modèle génératif.

4. Procédé d'une entité de réseau (30) mettant en œuvre une fonction de référentiel de données analytiques, le procédé comprenant les étapes suivantes
recevoir (S81) d'une entité de réseau (10) mettant en œuvre une fonction d'analyse de données de réseau une demande de stockage de données demandant le stockage de données historiques, ladite demande de stockage de données comportant des informations véhiculées et un indicateur indiquant un degré d'implication de modèles génératifs dans lesdites informations véhiculées qui représentent lesdites données historiques,
stocker (S82) lesdites informations véhiculées, et
transmettre (S83) une réponse d'accusé de réception de stockage de données, dans lequel
ledit indicateur indique que lesdites informations véhiculées comportent un ensemble de données partiel et au moins un modèle génératif configuré pour créer un ensemble de données complet sur la base dudit ensemble de données partiel, et
lesdites informations véhiculées comportent ledit ensemble de données partiel et ledit au moins un modèle génératif.

5. Procédé selon la revendication 4, dans lequel
lesdites informations véhiculées comportent une description de modèle génératif spécifiant l'utilisation dudit au moins un modèle génératif.

6. Appareil d'une entité de réseau (10) mettant en œuvre une fonction d'analyse de données de réseau, l'appareil comprenant
un ensemble de circuits de transmission (11) configuré pour transmettre à une entité de réseau (30) mettant en œuvre une fonction de référentiel de données analytiques une demande de stockage de données demandant le stockage de données historiques, ladite demande de stockage de données comportant des informations véhiculées et un indicateur indiquant un degré d'implication de modèles génératifs dans lesdites informations véhiculées qui représentent lesdites données historiques, et
un ensemble de circuits de réception (12) configuré pour recevoir une réponse d'accusé de réception de stockage de données, dans lequel
ledit indicateur indique que lesdites informations véhiculées comportent un ensemble de données partiel et au moins un modèle génératif configuré pour créer un ensemble de données complet sur la base dudit ensemble de données partiel, et
lesdites informations véhiculées comportent ledit ensemble de données partiel et ledit au moins un modèle génératif.

7. Appareil d'une entité de réseau (30) mettant en œuvre une fonction de référentiel de données analytiques, l'appareil comprenant
un ensemble de circuits de réception (31) configuré pour recevoir d'une entité de réseau (10) mettant en œuvre une fonction d'analyse de données de réseau une demande de stockage de données demandant le stockage de données historiques, ladite demande de stockage de données comportant des informations véhiculées et un indicateur indiquant un degré d'implication de modèles génératifs dans lesdites informations véhiculées qui représentent lesdites données historiques,
un ensemble de circuits de stockage (32) configuré pour stocker lesdites informations véhiculées, et
un ensemble de circuits de transmission (33) configuré pour transmettre une réponse d'accusé de réception de stockage de données, dans lequel
ledit indicateur indique que lesdites informations véhiculées comportent un ensemble de données partiel et au moins un modèle génératif configuré pour créer un ensemble de données complet sur la base dudit ensemble de données partiel, et
lesdites informations véhiculées comportent ledit ensemble de données partiel et ledit au moins un modèle génératif.
